# EUROPEAN PATENT SPECIFICATION

(11) **EP 2 361 825 B1**
(45) Date of publication and mention of the grant of the patent: **03.12.2014**
(21) Application number: 11250211.7
(22) Date of filing: 24.02.2011
(51) Int. Cl.: B62K 11/02

(54) **Scooter-type motorcycle frame**
Motorrollerrahmen
Cadre de motocyclette de type scooter

(30) Priority: 25.02.2010 TW 099105468
(43) Date of publication of application: 31.08.2011
(73) Proprietor: Kwang Yang Motor Co., Ltd., Kaohsiung (TW)
(72) Inventor: Wang, Wei-Hsiung, Kaohsiung City 807 Taiwan (CN); Tseng, Hsin-An, Kaohsiung City 811 Taiwan (CN); Lin, Tsung-Tzu, Kaohsiung County 840 Taiwan (CN)
(74) Representative: Potter Clarkson LLP

(56) References cited:
- CN-Y- 201 291 965
- US-A- 3 494 441
- US-A- 5 121 806

## Description

The present invention relates to a motorcycle frame, more particularly to a scooter-type motorcycle frame.

Referring to Figure 1, China Publication No. CN201291965 discloses a conventional scooter-type motorcycle frame with the features of the preamble of claim 1, that includes a head pipe 11, a main frame member 12, a pair of side frame members 13, and a pair of connecting segments 14. The head pipe 11 is configured to pivotably retain a front fork assembly. The main frame member 12 is fixedly connected to and extends downwardly from the head pipe 11. The side frame members 13 are connected to opposite sites of the main frame member 12, respectively, Each of the connecting segments 14 interconnects the head pipe 11 and a corresponding one of the side frame members 13.

Each of the side frame members 13 includes a first segment 131 fixedly connected to and extending downwardly from the main frame member 12, a second segment 132 extending backwardly and horizontally from the first segment 131 and fixedly connected to the main frame member 12, a third segment 133 extending backwardly and curvedly from the second segment 132, a seat rail 134 extending upwardly and backwardly from the third segment 133 for supporting a seat, and a hanging plate 135 fixedly connected to and disposed under the third segment 133 for hanging an engine.

The conventional scooter-type motorcycle frame further includes a pair of first reinforcing segments 15 and a pair of second reinforcing segments 16. Each of the first reinforcing segments 15 fixedly interconnects the first segment 131 and the third segment 133 of a corresponding one of the side frame members 13, and is adjacent to and spaced apart from the second segment 132 cf the corresponding one of the side frame members 13. Each of the second reinforcing segments 16 fixedly interconnects a corresponding one of the first reinforcing segments 15 and the third segment 133 of a corresponding one of the side frame members 13.

However, when a scooter-type motorcycle provided with the conventional scooter-type motorcycle frame moves at a relatively fast speed, an upward force may be applied to a front wheel of the scooter-type motorcycle to decrease a friction force between the front wheel and the ground since a front part of the conventional scooter-type motorcycle frame is not heavy enough. As a result, the scooter-type motorcycle is not stable, so that it is difficult for a rider to handle a handgrip thereof when the scooter-type motorcycle moves on an uneven road at a relatively fast speed.

Therefore, an object of the present invention is to provide a scooter-type motorcycle frame that is capable of providing relatively great stability of a scooter-type motorcycle provided with the same during movement of the scooter-type motorcycle.

Accordingly, a motorcycle frame includes a head pipe having an upper end and a lower end opposite to the upper end, a main frame member fixedly connected to and extending downwardly and backwardly from the upper end of the head pipe, a pair of side frame members, and a pair of main connecting segments.

Each of the side frame members includes a first segment fixedly connected to and extending downwardly from the main frame member, a second segment extending backwardly and horizontally from the first segment and fixedly connected to the main frame member, a third segment extending upwardly from a rear end of the second segment, a suspension segment extending curvedly and backwardly from the third segment for hanging an engine, and a seat rail extending upwardly and backwardly from the suspension segment for supporting a seat.

Each of the main connecting segments fixedly interconnects the lower end of the head pipe and the first segment of a corresponding one of the side frame members. The main connecting segments cooperate with the head pipe, the main frame member, and the first segment of each of the side frame members to define a space.

The motorcycle frame further includes a counterweight, at least a majority of which is disposed fixedly in the space.

Other features and advantages of the present invention will become apparent in the following detailed description of the preferred embodiment with reference to the accompanying drawings, of which:

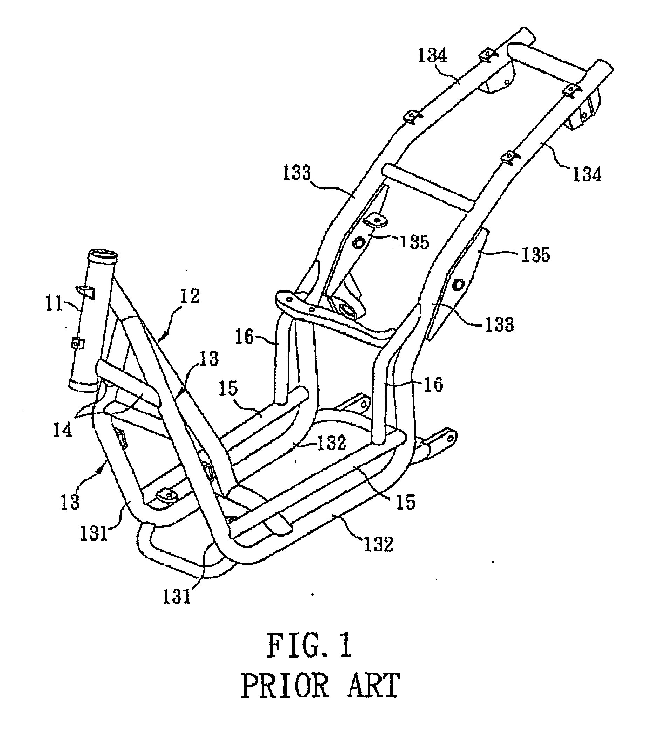

Figure 1 is a perspective view of a conventional scooter-type motorcycle frame disclosed in China Publication No. CN201291965,
Figure 2 is a side view of a preferred embodiment of a scooter-type motorcycle frame according to the present invention;
Figure 3 is a perspective view of the scooter-type motorcycle frame of the preferred embodiment; and
Figure 4 is a partly exploded perspective view illustrating a counterweight of the scooter-type motorcycle frame of the preferred embodiment.

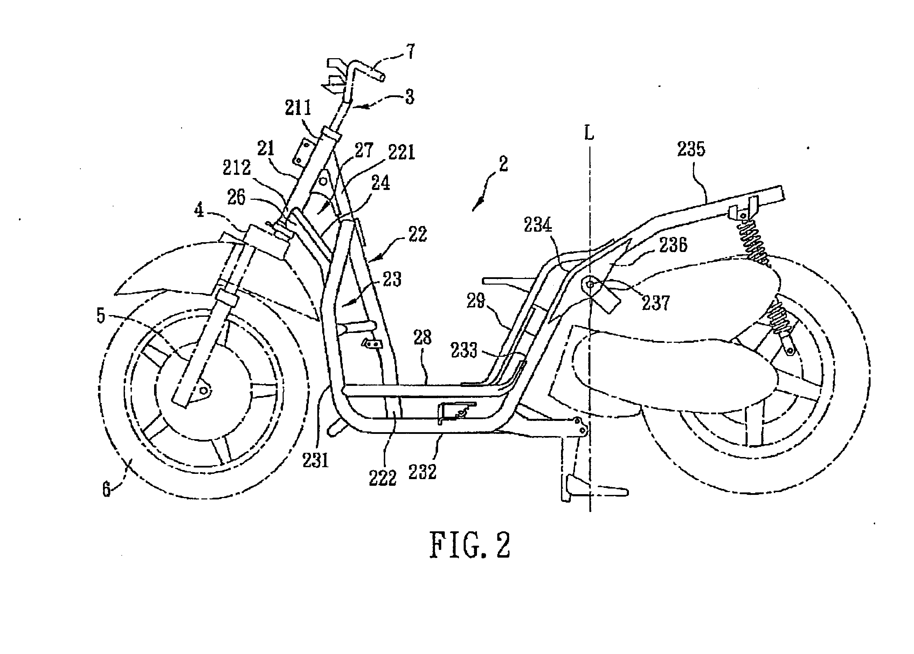

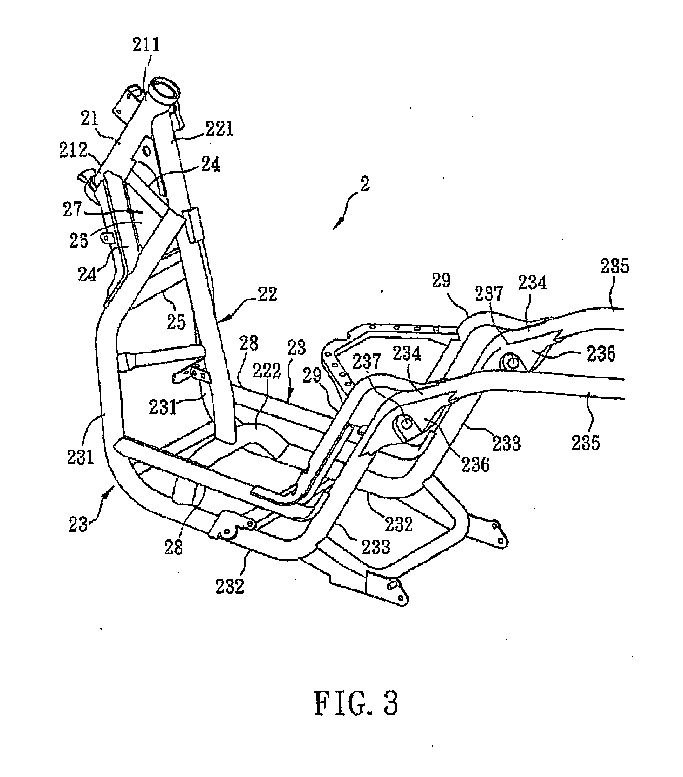

Referring to Figures 2 and 3, the preferred embodiment of a scooter-type motorcycle frame 2 according to the present invention includes a head pipe 21, a main frame member 22 a pair of side frame members 23, a pair of main connecting segments 24, an auxiliary connecting segment 25, and a counterweight 26. The main frame member 22 is fixedly connected to the head pipe 21. Each of the side frame members 23 is fixedly connected to the main frame member 22. Each of the main connecting segments 24 fixedly interconnects the head pipe 21 and a corresponding one of the side frame members 23. The auxiliary connecting segment 25 is horizontal, and interconnects the side frame members 23 fixedly. The main connecting segments 24 and the auxiliary connecting segment 25 are solid bars.

The head pipe 21 has an upper end 211 and a lower end 212 opposite to the upper end 211, and is configured to pivotably retain a front fork assembly 3 that includes handgrip 7, a connecting component 4 fixedly connected to a bottom end of the handgrip 7, and a front fork 5 connected to and disposed under the connecting component 4. A wheel 6 is to be mounted to and pivotable with respect to the front fork 5. The main frame member 22 includes an upright segment 221 fixedly connected to and extending downwardly and backwardly from the upper end 211 of the head pipe 21, and a horizontal segment 222 perpendicular to and connected to the upright segment 221.

Each of the side frame members 23 includes a first segment 231 fixedly connected to and extending downwardly from the vertical segment 221 of the main frame member 22, a second segment 232 extending backwardly and horizontally from the first segment 231 and fixedly connected to the horizontal segment 222 of the main frame member 22, an inclined third segment 233 extending upwardly and backwardly from the second segment 232, a suspension segment 234 extending curvedly and backwardly from the third segments 233, a seat rail 235 extending upwardly and backwardly from the suspension segment 234 for supporting a seat, and a having plate 236 fixedly connected to and disposed under the suspension segment 234 for hanging an engine. Each of the main connecting segments 24 fixedly interconnects the lower end 212 of the head pipe 21 and the first segment 231 of a corresponding one of the side frame members 23. The auxiliary connecting segments 25 fixedly interconnects the first segments 231 of the side frame members 23.

The scooter-type motorcycle frame 2 of this embodiment further includes a pair of main reinforcing segments 28, and a pair of auxiliary reinforcing segments 29. Each of the main reinforcing segments 28 fixedly interconnects the first segment 231 and the third segment 233 of a corresponding one of the side frame members 23, and is adjacent to and spaced apart from tha second segment 232 of the corresponding one of the side frame members 23. Each of the auxiliary reinforcing segments 29 fixedly interconnects a corresponding one of the main reinforcing segments 28 and a corresponding one of the side frame members 23. In this embodiment, each of the auxiliary reinforcing segments 29 is fixedly connected to the suspension segment 234 of the corresponding one of the side frame members 23.

The hanging plate 236 is formed with a hole 237 for the purpose of hanging the engine. As shown in Figure 2, each of the auxiliary reinforcing segments 29 is fixedly connected to the suspension segment 234 at a position that is behind a vertical phantom line (L) passing through the center of the hole 237 in the hanging plate 236. Due to this configuration, the auxiliary reinforcing segments 29 can reinforce effectively the suspension segments 234 of the side frame members 23 so as to alleviate vibration caused by the engine.

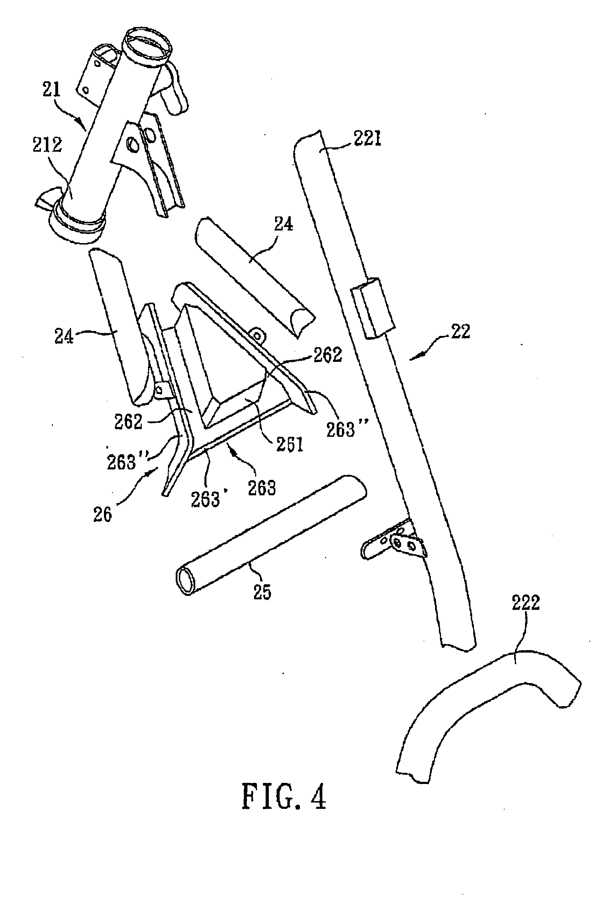

The head pipe 21, the vertical segment 221 of the main frame member 22, the first segment 231 of each of the side frame members 23, and the main connecting segments 24 cooperate to define a space 27. A majority of the counterweight 26 is disposed fixedly in a lower part of the space 27, and is adjacent to the connecting component 4 of the front fork assembly 3. Further referring to Figure 4, the counterweight 26 includes a plate 263 having a generally trapezoidal plate portion 263` and two side plate portions 263' extending respectively and perpendicularly from two opposite sides of the trapezoidal plate portion 263', and a weighting block 261 disposed on a central portion of the trapezoidal plate portion 263' and between the side plate portions 263". The plate 263 is fixedly connected to the lower end 212 of the head pipe 21 and the first segment 231 of each of the side frame members 23. The weighting block 261 cooperates with the trapezoidal plate portion 263' and the side plate portions 263" to define a pair of accommodating channels 262, each of which is disposed between the weighting block 261 and a respective one of the side plate portions 263" for fixedly receiving a corresponding one of the main connecting segments 24.

As a result, the counterweight 26 is configured for providing a downward force to the wheel 6 to thereby increase a friction force between the wheel 6 and the ground. Furthermore, the main connecting segments 24 and the auxiliary connecting segment 25 are used for further increasing the friction force between the wheel 6 and the ground since they are solid bars- Thus, it is relatively easy to handle the handgrip 3 for a rider of a scooter-type motorcycle provided with the motorcycle frame 2, and stability of the scooter-type motorcycle is also increased.

It should be noted that the stability of the scooter-type motorcycle is relatively great in view of a position of the counterweight 26 adjacent to the connecting component 4 of the front fork assembly 3. If the counterweight 26 in directly mounted on the connecting component 4, it may be difficult to operate the handgrip 3. If the counterweight 26 is mounted on the main frame member 22 or the first segments 231 of the side frame member 23, the counterweight 26 may not provided a sufficient downward force to the wheel 6 since it is relatively far from the wheel 6.

In summary, by the configurations and positions of the counterweight 26 and the auxiliary reinforcing segments 29, the stability of the motorcycle can be increased during movement of the motorcycle.

## Claims

1. A motorcycle frame (2) including:
a head pipe (21) having an upper end (211) and a lower end (212) opposite to said upper end (211);
a main frame member (22) fixedly connected to and extending downwardly and backwardly from said upper end (211) of said head pipe (21);
a pair of side frame members (23), each of which includes a first segment (231) fixedly connected to and extending downwardly from said main frame member (22), a second segment (232) extending backwardly and horizontally from said first segment (231) and fixedly connected to said main frame member (22), a third segment (233) extending from a rear end of said second segment (232), a suspension segment (234) extending curvedly and backwardly from said third segment (233) for hanging an engine, and a seat rail (235) extending upwardly and backwardly from said suspension segment (234) for supporting a seat; and
a pair of main connecting segments (24), each of which fixedly interconnects said lower end (212) of said head pipe (21) and said first segment (231) of a corresponding one of said side frame members (23), said main connecting segments (24) cooperate with said head pipe (21), said main frame member (22), and said first segment (231) of each of said side frame members (23) to define a space (27);
**characterised in that** said motorcycle frame (2) further includes a counterweight (26), at least a majority of which is disposed fixedly in said space (27).

2. The motorcycle frame (2) as claimed in Claim 1, further **characterized in that** the majority of said counterweight (26) is disposed in a lower part of said space (27), and includes:
a plate (263) fixedly connected to said lower end (212) of said head pipe (21) and said first segment (231) of each of said side frame members (23); and
a weighting block (261) disposed on a central portion of said plate (263) and cooperating with said plate (263) to define a pair of accommodating channels (262) respectively adjacent to opposite sides of said weighting block (261) for fixedly receiving said main connecting segments (24), respectively.

3. The motorcycle frame (2) as claimed in any one of Claims 1 and 2, **characterized by** a pair of main reinforcing segments (28), each of which fixedly interconnects said first segment (231) and said third segment (233) of a corresponding one of said side frame members (23) and is adjacent to and spaced apart from said second segment (232) of the corresponding one of said side frame members (23).

4. The motorcycle frame (2) as claimed in Claim 3, further **characterized by** a pair of auxiliary reinforcing segments (29) each of which fixedly interconnects a corresponding one of said main reinforcing segments (28) and said suspension segment (234) of a corresponding one of said side frame members (23).

5. The motorcycle frame (2) as claimed in Claim 4, further **characterized in that** each of said side frame members (23) further includes a hanging plate (236) fixedly connected to and disposed under said suspension segment (234) and formed with a hole (237) for the purpose of hanging the engine,
each of said auxiliary reinforcing segments (29) being fixedly connected to said suspension segment (234) at a position that is behind a vertical phantom line (L) passing through a center of said hole (237) in said hanging plate (236).

6. The motorcycle frame (2) as claimed in any one of Claims 1 to 5, further **characterized by** an auxiliary connecting segment (25) that fixedly interconnects said first segments (231) of said side frame members (23).

7. The motorcycle frame (2) as claimed in Claim 6, further **characterized in that** said auxiliary connecting segment (25) is a solid bar.

8. The motorcycle frame (2) as claimed in any one of Claims 1 to 7, further **characterized in that** said main connecting segments (24) are solid bars.

## Patentansprüche

1. Motorradrahmen (2), aufweisend:
einen Lenkkopf (21) mit einem oberen Ende (211) und einem dem oberen Ende (211) gegenüberliegenden unteren Ende (212);
ein Hauptrahmenelement (22), das fest mit dem oberen Ende (211) des Lenkkopfes (21) verbunden ist und sich davon nach unten und nach hinten erstreckt;
ein Paar Seitenrahmenelemente (23), die jeweils ein erstes Segment (231), das mit dem Hauptrahmenelement (22) fest verbunden ist und sich davon nach unten erstreckt, ein zweites Segment (232), das sich nach hinten und horizontal von dem ersten Segment (231) erstreckt und mit dem Hauptrahmenelement (22) fest verbunden ist, ein drittes Segment (233), das sich von einem hinteren Ende des zweiten Segments (232) erstreckt, ein Aufhängungssegment (234), das sich gebogen und nach hinten von dem dritten Segment (233) zum Einhängen eines Motors erstreckt, und eine Sitzführungsschiene (235) aufweisen, die sich nach oben und nach hinten von dem Aufhängungssegment (234) zum Aufnehmen eines Sitzes erstreckt; und
ein Paar Hauptverbindungssegmente (24), die jeweils das untere Ende (212) des Lenkkopfes (21) und das erste Segment (231) eines entsprechenden der Seitenrahmenelemente (23) miteinander fest verbinden, die Hauptverbindungssegmente (24) mit dem Lenkkopf (21), dem Hauptrahmenelement (22) und dem ersten Segment (231) von jedem der Seitenrahmenelemente (23) zusammenarbeiten, um einen Raum (27) zu definieren;
**dadurch gekennzeichnet, dass** der Motorradrahmen (2) des Weiteren ein Gegengewicht (26) aufweist, von dem mindestens ein Hauptanteil in diesem Raum (27) fest angeordnet ist.

2. Motorradrahmen (2) nach Anspruch 1, des Weiteren **dadurch gekennzeichnet, dass** der Hauptanteil des Gegengewichts (26) in einem unteren Teil des Raums (27) angeordnet ist, und Folgendes aufweist:
eine Platte (263), die mit dem unteren Ende (212) des Lenkkopfes (21) und dem ersten Segment (231) von jedem der Seitenrahmenelemente (23) fest verbunden ist; und
einen Gewichtsblock (261), der in einem zentralen Abschnitt der Platte (263) angeordnet ist und mit der Platte (263) zusammenarbeitet, um ein Paar Aufnahmekanäle (262) zu definieren, die jeweils auf gegenüberliegenden Seiten des Gewichtsblocks (261) zum festen jeweiligen Aufnehmen der Hauptverbindungssegmente (24) angrenzend liegen.

3. Motorradrahmen (2) nach einem der Ansprüche 1 und 2, **gekennzeichnet durch** ein Paar Hauptverstärkungssegmente (28), von denen jedes das erste Segment (231) und das dritte Segment (233) eines entsprechenden der Seitenrahmenelemente (23) miteinander verbindet und dem zweiten Segment (232) des entsprechenden einen der Seitenrahmenelemente (23) benachbart und davon beabstandet liegt.

4. Motorradrahmen (2) nach Anspruch 3, des Weiteren **gekennzeichnet durch** ein Paar Hilfsverstärkungssegmente (29), von denen jedes ein entsprechendes der Hauptverstärkungssegmente (28) und das Aufhängungssegment (234) eines entsprechenden der Seitenrahmenelemente (23) miteinander fest verbindet.

5. Motorradrahmen (2) nach Anspruch 4, des Weiteren **dadurch gekennzeichnet, dass** jedes der Seitenrahmenelemente (23) des Weiteren eine Hängeplatte (236) aufweist, die mit dem Aufhängungssegment (234) fest verbunden ist und darunter angeordnet ist und mit einer Öffnung (237) zum Aufhängen des Motors ausgebildet ist,
wobei jedes der Hilfsverstärkungssegmente (29) mit dem Aufhängungssegment (234) an einer Position fest verbunden ist, die hinter einer vertikalen Phantomlinie (L) liegt, die durch einen Mittelpunkt der Öffnung (237) in der Hängeplatte (236) geht.

6. Motorradrahmen (2) nach einem der Ansprüche 1 bis 5, des Weiteren **gekennzeichnet durch** ein Hilfsverbindungssegment (25), das die ersten Segmente (231) der Seitenrahmenelemente (23) fest miteinander verbindet.

7. Motorradrahmen (2) nach Anspruch 6, des Weiteren **dadurch gekennzeichnet, dass** das Hilfsverbindungssegment (25) eine massive Stange ist.

8. Motorradrahmen (2) nach einem der Ansprüche 1 bis 7, des Weiteren **dadurch gekennzeichnet, dass** die Hauptverbindungssegmente (24) massive Stangen sind.

## Revendications

1. Cadre de motocyclette (2) comprenant :
une tubulure de refoulement (21) ayant une extrémité supérieure (211) et une extrémité inférieure (212) opposée à ladite extrémité supérieure (211) ;
un élément de cadre principal (22) raccordé de manière fixe à et s'étendant vers le bas et vers l'arrière à partir de ladite extrémité supérieure (211) de ladite tubulure de refoulement (21) ;
une paire d'éléments de cadre latéraux (23) dont chacun comprend un premier segment (231) raccordé de manière fixe à et s'étendant vers le bas à partir dudit élément de cadre principal (22), un deuxième segment (232) s'étendant vers l'arrière et horizontalement à partir dudit premier segment (231) et raccordé de manière fixe audit élément de cadre principal (22), un troisième segment (233) s'étendant à partir d'une extrémité arrière dudit deuxième segment (232), un segment de suspension (234) s'étendant de manière incurvée et vers l'arrière à partir dudit troisième segment (233) pour suspendre un moteur, et un rail de selle (235) s'étendant vers le haut et vers l'arrière à partir dudit segment de suspension (234) pour supporter une selle ; et
une paire de segments de raccordement principaux (24) dont chacun interconnecte de manière fixe ladite extrémité inférieure (212) de ladite tubulure de refoulement (21) et ledit premier segment (231) d'un élément correspondant desdits éléments de cadre latéraux (23), lesdits segments de raccordement principaux (24) coopérant avec ladite tubulure de refoulement (21), ledit élément de cadre principal (22) et ledit premier segment (231) de chacun desdits éléments de cadre latéraux (23) pour définir un espace (27) ;
**caractérisé en ce que** ledit cadre de motocyclette (2) comprend en outre un contrepoids (26), dont au moins une majorité est disposée de manière fixe dans ledit espace (27).

2. Cadre de motocyclette (2) selon la revendication 1, **caractérisé en outre en ce que** la majorité dudit contrepoids (26) est disposée dans une partie inférieure dudit espace (27), et comprend :
une plaque (263) raccordée de manière fixe à ladite extrémité inférieure (212) de ladite tubulure de refoulement (21) et ledit premier segment (231) de chacun desdits éléments de cadre latéraux (23) ; et
un bloc de charge (261) étant disposé sur une partie centrale de ladite plaque (263) et coopérant avec ladite plaque (263) pour définir une paire de canaux de logement (262) respectivement adjacent aux côtés opposés dudit bloc de charge (261) pour recevoir de manière fixe lesdits segments de raccordement principaux (24), respectivement.

3. Cadre de motocyclette (2) selon l'une quelconque des revendications 1 et 2, **caractérisé par** une paire de segments de renforcement principaux (28), dont chacun interconnecte de manière fixe ledit premier segment (231) et ledit troisième segment (233) d'un élément correspondant desdits éléments de cadre latéraux (23) et est adjacent à et espacé dudit deuxième segment (232) d'un élément correspondant desdits éléments de cadre latéraux (23).

4. Cadre de motocyclette (2) selon la revendication 3, **caractérisé en outre par** une paire de segments de renforcement auxiliaires (29), dont chacun interconnecte de manière fixe un segment correspondant desdits segments de renforcement principaux (28) et un segment de suspension (234) d'un élément correspondant desdits éléments de cadre latéraux (23).

5. Cadre de motocyclette (2) selon la revendication 4, **caractérisé en outre en ce que** chacun desdits éléments de cadre latéraux (23) comprend en outre une plaque de suspension (236) raccordée de manière fixe à et disposée sous ledit segment de suspension (234) et formée avec un trou (237) afin de suspendre le moteur,
chacun desdits segments de renforcement auxiliaires (29) étant raccordé de manière fixe audit segment de suspension (234) dans une position qui est derrière une ligne fantôme verticale (L) passant par un centre dudit trou (237) dans ladite plaque de suspension (236).

6. Cadre de motocyclette (2) selon l'une quelconque des revendications 1 à 5, **caractérisé en outre par** un segment de raccordement auxiliaire (25) qui interconnecte de manière fixe lesdits premiers segments (231) desdits éléments de cadre latéraux (23).

7. Cadre de motocyclette (2) selon la revendication 6, **caractérisé en outre en ce que** ledit segment de raccordement auxiliaire (25) est une barre pleine.

8. Cadre de motocyclette (2) selon l'une quelconque des revendications 1 à 7, **caractérisé en outre en ce que** lesdits segments de raccordement principaux (24) sont des barres pleines.
